# EUROPÄISCHE PATENTSCHRIFT

(11) **EP 0 996 931 B1**
(45) Veröffentlichungstag und Bekanntmachung des Hinweises auf die Patenterteilung: **04.09.2002**
(21) Anmeldenummer: 98943753.8
(22) Anmeldetag: 21.07.1998
(51) Int. Cl.: G06K 19/077

(54) **CHIPKARTE MIT TEMPORÄR SPEICHERFÄHIGER ANZEIGE AUF DER BASIS VON AKTIVMATRIXDISPLAYS, VERFAHREN ZUR HERSTELLUNG UND VERWENDUNG DIESER KARTE**
CHIP CARD WITH A DISPLAY DEVICE CAPABLE OF TEMPORARY DATA STORING ON THE BASIS OF ACTIVE MATRIX DISPLAYS, METHOD OF PRODUCTION AND USE OF THIS CARD
CARTE A PUCE DOTEE D'UN AFFICHAGE AVEC POSSIBILITE DE MEMORISATION TEMPORAIRE SUR LA BASE D'UN AFFICHAGE A MATRICE ACTIVE, PROCEDE DE PRODUCTION ET D' UTILISATION DE CETTE CARTE

(30) Priorität: 25.07.1997 DE 19732159
(43) Veröffentlichungstag der Anmeldung: 03.05.2000
(73) Patentinhaber: Aventis Research & Technologies GmbH & Co KG, 65926 Frankfurt am Main (DE)
(72) Erfinder: HORNUNG, Barbara, D-63594 Hasselroth (DE); DÜBAL, Hans-Rolf, D-65343 Eltville (DE)
(74) Vertreter: Isenbruck, Günter
(86) Internationale Anmeldenummer: EP9804549
(87) Internationale Veröffentlichungsnummer: WO99005644

(56) Entgegenhaltungen:
- EP-A- 0 299 546
- EP-A- 0 323 859
- EP-A- 0 362 948
- EP-A- 0 434 627
- FR-A- 2 743 021
- PATENT ABSTRACTS OF JAPAN vol. 097, no. 005, 30. Mai 1997 & JP 09 005794 A (SEMICONDUCTOR ENERGY LAB CO LTD), 10. Januar 1997

## Beschreibung

Die vorliegende Erfindung befrifft eine Chipkarte mit temporär speicherfähiger Anzeige auf der Basis von Aktivmatrixdisplays, ein Verfahren zur Herstellung und ein Verfahren zur Verwendung einer solchen Chipkarte.

Unter einer Chipkarte versteht man eine Karte, üblicherweise aus Kunststoff und im Kreditkartenformat, versehen mit einem integrierten Schaltkreis, welcher Informationen elektronisch speichern und/oder verarbeiten kann, und Mitteln zur Informationsübertragung zwischen der Karte und einem elektronischen Leseund/oder Schreibsystem.
Eine Smartcard ist eine Chipkarte, die zusätzlich Mittel zur Überprüfung /Kontrolle des Zugriffs auf die Karte enthält. Beispielsweise kann dieses Mittel ein integrierter Schaltkreis sein, durch den kontrolliert wird, wer die gespeicherten Informationen zu welchem Zweck verwendet. Dadurch kann die Datensicherheit erhöht werden.

Chip- bzw. Smartkarten sind, beispielsweise als Telefon- und Kreditkarten "Medicards", "Cashcards" und als Ausweise zur Zugangskontrolle, bereits in vielfältigem Einsatz.
Für die nahe Zukunft erwartet man ein weiteres Vordringen dieser Technologien in Bereiche wie die "elektronische Brieftasche", d.h. Ersatz von Bargeld, Fahrkarten und Pay-TV.

Wünschenswert und bereits vorgeschlagen für Chipkarten ist eine sichtbare elektronische Anzeige (Display) auf der Karte, die Informationen, beispielsweise über Füllstand, Restbetrag oder Datumsangaben, liefert. Ein derartiges Flüssigkristalldisplay ist in FR-A-2 743 021 beschrieben.

Eine solche Anzeige sollte auch ohne das Anlegen einer elektrischen Spannung sichtbar sein, da weder die Dicke noch die Herstellkosten einer Karte den Einbau einer Batterie erlauben. Die Anzeige muß also eine optische Speicherfähigkeit besitzen.

Aus Gründen der optischen Bistabilität wurden für solche Anwendungen bisher oberflächenstabilisierte-ferroelektrische-Flüssigkristall-Displays (Surface Stabilized Ferroelectric Liquid Crystal Displays, SSFLCD) und Bistabil-Nematische-Anzeigen (siehe E. Lüder et al. 1997 International Symposium, Seminar & Exhibition, Society of Information Display, Boston, Massachusetts, Artikel 9.4, SID 97 DIGEST, S. 109-112) sowie oberflächen- oder polymerstabilisierte-cholesterische-Texturen (SSCT oder PSCT) vorgeschlagen.

SSFLCD's sind bereits als Computerdisplays im Einsatz, die Verwendung in Chipkarten erfordert jedoch ein beträchtlich anderes Eigenschaftsprofil, das beispielsweise nach ISO 7816 neben der optischen Speicherfähigkeit Druck- und Stoßfestigkeit, Biegsamkeit, eine niedrige Adressierspannung, Lesbarkeit bei Tageslicht und besonders geringe Dicke und Gewicht umfaßt.

Es besteht daher ein hoher Bedarf an Flüssigkristall(LC)-Displays, die speziell den Anforderungen an Chip- oder Smartcards gewachsen sind.

Bistabile Anzeigen, wie FLC und bistabile nematische Displays, speichern die einmal eingeschriebene Information beliebig lange. In der Praxis ist es jedoch für manche Anwendungen wünschenswert, daß die Information nicht ständig lesbar ist.

Aktivmatrixanzeigen besitzen eine begrenzte optische Speicherfähigkeit dadurch, daß die in einem Bildpunkt eingeschriebene Ladung durch ein hochohmig geschaltetes elektrisch nichtlineares Bauelement, in der Regel ein Dünnschichttransistor, solange erhalten bleibt, bis sie über Flüssigkristall- und Orientierungsschichten bzw. über den Sperrwiderstand des besagten elektrisch nichtlinearen Elementes neutralisiert wird und damit auch die optische Anzeige verschwindet. Dadurch bleibt die Anzeige für eine bestimmte Zeitspanne sichtbar (siehe z.B. B.Bahadur, Liquid Crystals Application and Uses, Vol. 1, pp. 403, World Scientific Publishing, 1990). Diese temporäre Speichereigenschaft ist unabhängig von der Art des gewählten elektrooptischen Flüssigkristalleffekts grundsätzlich vorhanden.

Gegenstand der Erfindung ist daher eine Chipkarte, enthaltend ein Aktivmatrix-Flüssigkristalldisplay (AMLCD) zur Anzeige elektronisch gespeicherter Information, wobei die Information länger als 1s und weniger als 15 Min sichtbar bleibt.

Die erfindungsgemäß verwendete Aktivmatrix-Flüssigkristallanzeige bietet den Vorteil, daß die Information nicht ständig lesbar und damit bei etwaigem Verlust auch für unbefugte Dritte erkennbar ist.

Dies wird dadurch verhindert, daß die Information nur kurzzeitig unmittelbar nach dem letzten Schreib- oder Lesevorgang am einem dafür vorgesehenen Gerät erkennbar ist und nach einer bestimmten Dauer wieder verschwindet. So wird die Datensicherheit und die Akzeptanz der Kartenbenutzer erhöht.

Die Karte ist in hohem Maße mechanisch stabil, d.h. biegsam, unempfindlich gegen Druck und Temperaturschwankungen und langzeitstabil.

Durch die verwendete Technologie ist insbesondere bei kleinen Displays eine kostengünstige Herstellung möglich.

Das in der erfindungsgemäßen Chipkarte verwendete Aktivmatrix-Display enthält Polarisatoren, Elektroden, z.B. aus Indium-Zinn-Oxid, Substrate aus Kunststoff oder dünnem Glas, die mit einer Orientierungsschicht und möglicherweise weiteren Funktionsschichten (z.B. Passivierungs-, Diffusionssperr-, Isolations- und/oder Antireflexschichten) versehen sind, eine Flüssigkristallschicht und aktive Dünnschichtelemente.

Letztere umfassen beispielsweise die Typen aSi-TFT, (TFT = Thin Film Transistor) pSi-TFT, Dioden und Metall-Insulator-Metall (MIM) Elemente. Das erfindungsgemäße Display kann auch vom Typ In-Plane Switching-LCD, AM-ECB (Aktive-Matrix-Electrically Controlled Birefringence), AM-VA (Vertically Aligned) oder ein ähnlich arbeitendes Aktivmatrix-Flüssigkristalldisplay sein. (siehe z.B. C.Prince, Seminar Lecture Notes, Volume I, p. M-3/3-M-3/22, SID International Symposium 1997, B. B.Bahadur, Liquid Crystals Application and Uses, Vol. 1, pp. 410, World Scientific Publishing, 1990; E. Lüder, Recent Progress of AM LCD's,Proceedings of the 15^{th} International Display Research Conference, 1995, p.9 -p.12).

Ebenfalls umfaßt von der vorliegenden Erfindung werden Anordnungen, bei denen nichtlineare Schaltelemente, die der Funktion der Informationsspeicherung dienen, außerhalb des eigentlichen Displays auf der Karte angebracht sind.

Weitere Vorteile der erfindungsgemäßen Chipkarte sind :

Der Speicherinhalt der erfindungsgemäßen Chipkarte ist für einen kurzen Zeitraum nach Schreiben des Inhalts sichtbar. Dieser Zeitraum kann über den Aufbau des Aktivmatrixdisplays, insbesondere über die Einstellung der 'holding ratio' bzw. der Zeitkonstante "off/on", wie z.B. bei C. Prince, Seminar Lecture Notes, Volume I, p. M-3/3-M-3/22, SID International Symposium 1997, nach bekannten Verfahren eingestellt werden (siehe z.B. B.B. Bahadur et al., Liquid Crystals Applications and Uses, Vol. 1, pp 410, World Scientific Publishing, Singapore 1990).

Der Zeitraum beträgt mehr als 1 s (s = sekunde), besonders bevorzugt 3 s bis 15 min.

Die erfindungsgemäß verwendeten Displays können vorteilhaft Elektrodenabstände von mehr als 2µm, insbesondere von mehr als 3µm aufweisen und lassen sich dennoch bei niedrigen Spannungen von ≤ 5 Volt schalten. Im Vergleich zu den bekannten FLC -Displays ermöglicht der große Elektrodenabstand eine hohe Ausbeute bei der Fertigung.

Die Ansteuerung des erfindungsgemäßen Displays erfolgt im allgemeinen direkt oder als Multiplex-Ansteuerung (siehe z.B. C.Prince, Seminar Lecture Notes, Volume I, p. M-3/3-M-3/22, SID International Symposium 1997).

Die zwei Substrate (Trägerplatten) des erfindungsgemäß verwendeten Flüssigkristall-Displays können z.B. aus Glas oder, wegen der Biegbarkeit vorzugsweise, Kunststoff bestehen oder auch jeweils eines aus Glas, das andere aus Kunststoff. Als Kunststoffe eignen sich, beispielsweise bekannte Kunststoffe wie Polyarylate, Polyethersulfone, Cycloolefin-Copolymere, Polyetherimide, Polycarbonat, Polystyrol, Polyester, Polymethylmetacrylate, sowie deren Copolymere oder Blends.

Die gesamte, üblicherweise mit einem Kleberahmen verschlossene Zelle kann elektrisch, beispielsweise durch Löten, Bonden, Pressen o.ä. kontaktiert werden.

Die Herstellung des Displays für die erfindungsgemäße Chipkarte kann somit grundsätzlich bekannten Verfahren folgen, wie sie beispielsweise bei E. Lüder et al., 1997 International Symposium, Seminar & Exhibition, Society of Information Display, Boston, Massachusetts, Artikel 9.4, SID 97 DIGEST, S. 109-112, beschrieben sind.

Zur Herstellung einer Chipkarte wird das Display in oder auf eine mit einem oder mehreren elektronischen Mikrochips versehenen Kunststoffkarte eingebettet bzw. aufgebracht.

Die Mikrochips enthalten die Programm- und/oder Speicherfunktionen, welche die gewünschte Funktion der Chipkarte gewährleisten. Solche Chips und ihre Herstellung sind dem Fachmann bekannt.

Die Karte enthält zudem Mittel für einen Datenaustausch mit einem externen Schreib- und/oder Lesesystem, beispielsweise elektrisch leitende Kontakte oder eine "Antenne" in Form von Flachspulen.

Der Kartenkörper besteht im allgemeinen aus Kunststoff, vorzugsweise aus Polyvinylchlorid (PVC) oder Acryl-butadien-styrol-Copolymeren (ABS) oder Biopol® (ein biologisch abbaubarer Kunststoff, aus nachwachsenden Ressourcen, der Firma Monsanto, USA).

Die verwendeten Kunststoffkarten sind bekannt und größtenteils kommerziell erhältlich (z.B. Gemplus, http://www.gemplus.fr).

Übliche technische Spezifikationen für Erfindungsgemäße Chip- oder Smartkarten finden sich beispielsweise in:
ICC-Card Specification for Payment Systems, Fassung 3 (1996), und der darin zitierten Literatur, insbesondere:
- Europay, MasterCard, and Visa (EMV): June 30, 1996
   Integrated Circuit Card Application Specification for Payment Systems
- ISO/IEC 7813:1990
   Identification cards - Financial transaction cards
- ISO 7816:1987
   Identification cards - Integrated circuit(s) cards with contacts
   - Part 1: Physical characteristics
- ISO 7816-2:1988
   Identification cards - Integrated circuit(s) cards with contacts
   - Part 2: Dimensions and location of contacts
- ISOIIEC 7816-3:1989
   Identification cards - Integrated circuit(s) cards with contacts
   - Part 3: Electronic signals and transmission protocols
- ISO/IEC 7816-3:1992
   Identification cards - Integrated circuit(s) cards with contacts
   - Part 3, Amendment 1: Protocol type T=1, asynchronous half duplex block transmission protocol
- ISO/IEC 7816-3:1994
   Identification cards - Integrated circuit(s) cards with contacts
   - Part 3, Amendment 2: Protocol type selection (Draft International Standard)
- ISO/IEC 7816-4:1995
   Identification cards - Integrated circuit(s) cards with contacts
   - Part 4, Inter-industry commands for interchange
- ISO/IEC 7816-5:1994
   Identification cards - Integrated circuit(s) cards with contacts
   - Part 5: Numbering system and registration procedure for application identifiers
- ISO/IEC 7816-6:1995
   Identification cards - Integrated circuit(s) cards with contacts
   - Part 6: Inter-industry data elements (Draft International Standard).

Die erfindungsgemäße Chipkarte eignet sich beispielsweise zur Zugangskontrolle, als Scheckkarte, elektronische Fahrkarte, Telefonkarte, Parkhauskarte, "elektronische Brieftasche" oder für Pay-TV.

In einem bevorzugten Verfahren zur Herstellung der erfindungsgemäßen Chipkarte wird ein Aktivmatrix-Flüssigkristalldisplay in oder auf eine Kunststoffkarte eingebettet bzw. eingebracht, wobei die Kunststoffkarte einen integrierten Schaltkreis, welcher Informationen elektronisch speichern und/oder bearbeiten kann, und Mittel zur Informationsübertragung zwischen Karte und einem elektronischen Lese- und/oder Schreibsystem enthält.

## Patentansprüche

1. Chipkarte, enthalten ein Flüssigkristalldisplay zur Anzeige elektronisch gespeicherter Information, **dadurch gekennzeichnet, dass** das Flüssigkristalldisplay ein Aktivmatrix-Flüssigkristalldisplay ist und die Information länger als 1 s und weniger als 15 min sichtbar bleibt.

2. Chipkarte nach Anspruch 1, **dadurch gekennzeichnet, dass** der Elektrodenabstand mehr als 2 µm beträgt.

3. Chipkarte nach einem der Ansprüche 1 oder 2, **gekennzeichnet durch** eine Aktivmatrix vom Typ aSi-TFT.

4. Chipkarte nach einem der Ansprüche 1 oder 2, **gekennzeichnet durch** eine Aktivmatrix vom Typ pSi-TFT.

5. Chipkarte nach einem der Ansprüche 1 oder 2, **gekennzeichnet durch** eine Aktivmatrix vom Typ Dioden oder MIM.

6. Verfahren zur Herstellung einer Chipkarte gemäß einem oder mehreren der Ansprüche 1 bis 5, **dadurch gekennzeichnet, dass** man ein Aktivmatrix-Flüssigkristalldisplay in oder auf eine Kunststoffkarte einbettet bzw. einbringt, wobei die Kunststoffkarte einen integrierten Schaltkreis, welcher Informationen elektronisch speichern und/oder bearbeiten kann, und Mittel zur Informationsübertragung zwischen der Karte und einem elektronischen Lese- und/oder Schreibsystem enthält.

7. Verwendung einer Chipkarte gemäß einem der Ansprüche 1 bis 5 zur Zugangskontrolle, als Scheckkarte, elektronische Fahrkarte, Telefonkarte, Parkhauskarte, "elektronische Brieftasche" oder für Pay-TV.

## Claims

1. A chip card, containing a liquid crystal display for displaying electronically stored information, wherein the liquid crystal display is an active matrix liquid crystal display and that the information remains visible for longer than 1 s and less than 15 min.

2. The chip card as claimed in claim 1, wherein the electrode spacing is more than 2 µm.

3. The chip card as claimed in claim 1 or 2, which has an active matrix of the aSi-TFT type.

4. The chip card as claimed in claim 1 or 2, which has an active matrix of the pSi-TFT type.

5. The chip card as claimed in claim 1 or 2, which has an active matrix of the diodes or MIM type.

6. A method for producing a chip card as claimed in one or more of claims 1 to 5, wherein an active matrix liquid crystal display is embedded or applied in or to a plastic card, the plastic card containing an integrated circuit, which can store and/or process information electronically, and means for transferring information between the card and an electronic reading and/or writing system.

7. The use of a chip card, as claimed in one of claims 1 to 5, for access control, as a check card, electronic travel ticket, telephone card, multi-story car park card, "electronic wallet" or for Pay TV.

## Revendications

1. Carte à puce, comprenant un écran à cristaux liquides pour l'affichage d'une information mémorisée de façon électronique, **caractérisée en ce que** l'écran à cristaux liquides est un écran à cristaux liquides à matrice active et **en ce que** l'information reste visible plus de 1 s et moins de 15 min.

2. Carte à puce selon la revendication 1, **caractérisée en ce que** la distance entre les électrodes est supérieure à 2 µm.

3. Carte à puce selon l'une des revendications 1 ou 2, **caractérisée par** une matrice active de type TFT aSi.

4. Carte à puce selon l'une des revendications 1 et 2, **caractérisée par** une matrice active de type TFT pSi.

5. Carte à puce selon l'une des revendications 1 et 2, **caractérisée par** une matrice active de type diodes ou MIM.

6. Procédé de fabrication d'une carte à puce selon l'une ou plusieurs des revendications 1 à 5, **caractérisé en ce qu'**un écran à cristaux liquides est encastré ou déposé dans, respectivement sur, une carte en matière plastique, laquelle carte en matière plastique contient un circuit intégré, qui peut mémoriser et/ou traiter de façon électronique les informations de celui-ci, et un canal de transport de l'information entre la carte et un système électronique de lecture et/ou d'écriture.

7. Utilisation d'une carte à puce selon l'une des revendications 1 à 5 pour le contrôle d'accès, comme carte bancaire, billet électronique, carte téléphonique, ticket de parking, « porte-monnaie électronique » ou pour les chaînes de télévision cryptées.
